# EUROPÄISCHE PATENTANMELDUNG

(11) **EP 2 489 996 A1**
(43) Veröffentlichungstag der Anmeldung: **22.08.2012**
(21) Anmeldenummer: 12002690.1
(22) Anmeldetag: 18.04.2012
(51) Int. Cl.: G01F 23/26

(54) **Haushaltgerät mit Wasserstandssensor**

(71) Anmelder: V-Zug AG, 6301 Zug (CH)
(72) Erfinder: Meier, Ernst, 6206 Neuenkirch (CH); Dennig, Hans-Jörg, 8032 Zürich (CH); Hopfmann, Marco, 8590 Romanshorn (CH); Schürch, Georg, 8615 Wermatswil (CH); Höin, Michael, 8600 Dübendorf (CH)
(74) Vertreter: Sutter, Kurt

(57) **Zusammenfassung**

Ein Haushaltgerät mit einem Tank (1) zur Aufnahme von Wasser weist einen kapazitiven Füllstandssensor (6, 7) auf. Der Füllstandssensor (6, 7) umfasst eine Elektrodenanordnung (6), die bei eingesetztem Tank (1) an einer Wand (16) des Tanks (1) anliegt. Auf der Elektrodenanordnung (6) sind Messelektroden (10 - 12) vorgesehen, um den Füllstand des Tanks (1) zu messen. Um eine genaue Messung zu erhalten, sind mehrere elastisch verformbare Elemente (17) vorgesehen, die beim Andrücken der Wand (16) gegen die Elektrodenanordnung (6) komprimiert werden. Mit der Anordnung kann auch festgestellt werden, ob der Tank (1) eingesetzt ist oder nicht.

## Beschreibung

### Gebiet der Erfindung

Die Erfindung betrifft ein Haushaltgerät mit mindestens einem Tank zur Aufnahme von Wasser und mit einem Füllstandssensor zur Messung eines Füllstands des Tanks.

### Hintergrund

Verschiedene Arten von Haushaltgeräten besitzen Tanks zur Aufnahme von Wasser, so z.B. Wäscheaufbereitungsvorrichtungen, Dampfgargeräte, etc. Tanks dieser Art können z.B. dazu dienen, Frischwasser oder aus zu bearbeitendem Gut extrahiertes Wasser aufzunehmen.

Um den Füllstand solcher Tanks zu detektieren, werden z.B. Schwimmer oder dergleichen eingesetzt.

### Darstellung der Erfindung

Es stellt sich die Aufgabe, ein Haushaltsgerät der eingangs genannten Art bereitzustellen, dass in einfacher Weise eine Füllstandsbestimmung erlaubt.

Diese Aufgabe wird vom Haushaltgerät gemäss Anspruch 1 erfüllt. Demgemäss wird zur Bestimmung des Füllstands ein kapazitiver Sensor verwendet, der ausserhalb des Tanks angeordnet ist. Diese Lösung ist einfach zu realisieren und hat den Vorteil, dass Füllstandssensor und Wasser räumlich getrennt sind. Unter "kapazitivem Sensor" ist dabei ein Sensor zu verstehen, der einen Kondensator aufweist, dessen Kapazität sich abhängig vom Wasserstand ändert, und der eine Schaltung zum Erzeugen eines von der Kapazität abhängigen Signals aufweist.

Besonders vorteilhaft ist die Verwendung eines kapazitiven Sensors deshalb, weil der Tank mechanisch vom Füllstandssensor derart getrennt sein kann, dass der Tank ohne den Füllstandssensor aus dem Haushaltgerät entnehmbar ist.

Um eine gute und definierte Detektion durchzuführen, ist der kapazitive Sensor vorzugsweise so ausgestaltet, dass eine Elektrodenanordnung desselben bei eingesetztem Tank aussen an der Wand des Tanks anliegt.

Der kapazitive Sensor lässt auch eine "nichtbinäre", d.h. ortsaufgelöste Messung zu. Wenn er eine erste Elektrode aufweist, die sich über eine vorgegebene Höhe erstreckt, so kann eine mit der Elektrode verbundene Auswerteelektronik auch mehr als zwei unterschiedliche Füllstandswerte erzeugen. Dies beruht auf der Erkenntnis, dass die Kapazität der Elektrode vom Füllstand ungefähr linear abhängt, soweit sich der Wasserpegel irgendwo auf der Höhe der Elektrode befindet, so dass sich mit nur einer Messelektrode mehr als nur zwei Füllzustände unterscheiden lassen.

Die Erfindung ist besonders geeignet zum Einsatz in einem Dampfgargerät, wo der Tank zur Aufnahme des Wassers für den Dampfgenerator dient, oder in einem Wäscheaufbereitungsgerät, wo der Tank für die Aufnahme von aus der Wäsche extrahiertem Wasser oder für Frischwasser zur Wäschebedampfung verwendet wird.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch einen Teil eines Haushaltgeräts,
Fig. 2 eine Elektrodenanordnung und
Fig. 3 ein Blockdiagramm einer Auswerteschaltung.

### Wege zur Ausführung der Erfindung

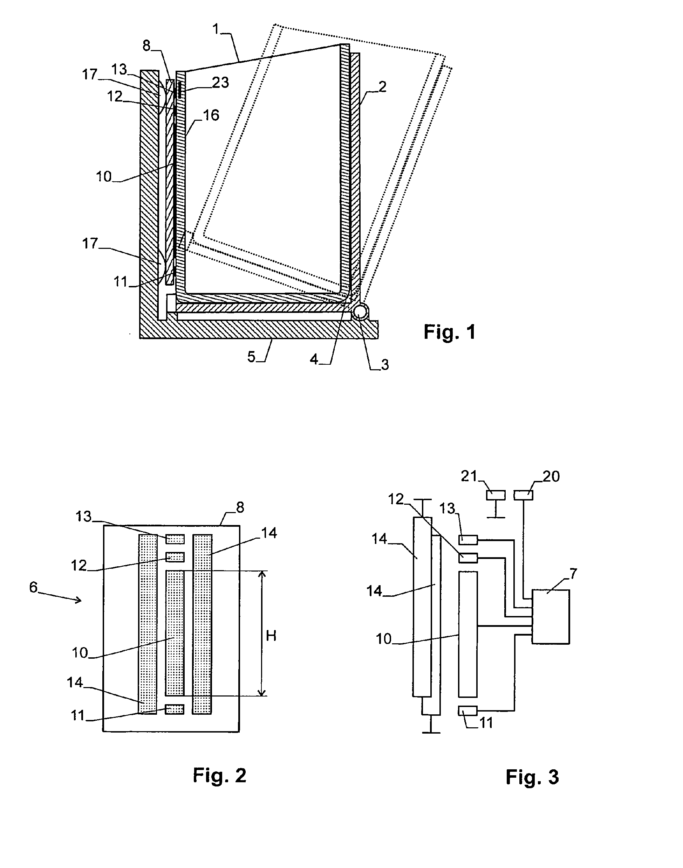

Fig. 1 zeigt einen Schnitt durch ein Haushaltgerät im Bereich eines Wassertanks 1. Beim Wassertank handelt es sich um einen Behälter zur Aufnahme von Wasser. Dabei kann es sich z.B. um Wasser handeln, das dem Haushaltgerät zugeführt werden muss, oder um solches, das beim Betrieb des Haushaltgeräts anfällt und aufgefangen werden soll.

Der Begriff Wasser umfasst dabei generell Flüssigkeiten mit hohem (mindestens 25%) Wasseranteil, so dass die Flüssigkeit eine hohe elektrische Permittivität ε besitzt.

Tank 1 ist so ausgestaltet, dass er als Einheit dem Gerät entnommen werden kann, insbesondere um ihn zu befüllen, zu entleeren oder zu reinigen.

In der dargestellten Ausführung ist der Tank 1 in einer Schwenkhalterung 2 schwenkbar gehalten. Er kann zwischen einer ersten Position (in Fig. 1 mit durchgezogenen Linien dargestellt) und einer zweiten Position (gestrichelt dargestellt) um eine horizontale Schwenkachse 3 verschwenkt werden. In der ersten Position steht er in Kontakt mit einer Elektrodenanordnung 6 des weiter unten beschriebenen kapazitiven Sensors, in der zweiten Position kann er dem Gerät entnommen werden.

In der dargestellten Ausführung bildet die Schwenkhalterung 2 einen Halter für den Tank 1, in welcher dieser eingesetzt werden kann. Die Schwenkachse 3 befindet sich im Bereich einer Kante 4 des Tanks, wobei sich die Kante 4 an der der Elektrodenanordnung 6 gegenüber liegenden Seite des Tanks 1 befindet.

Über die Schwenkachse 3 ist die Schwenkhalterung 2 mit einem stationären Teil 5 des Haushaltgeräts verbunden.

Ebenfalls am stationären Teil 5 des Haushaltgeräts ist die Elektrodenanordnung 6 des bereits erwähnten kapazitiven Sensors befestigt. Dieser Sensor umfasst weiter eine Auswerteelektronik 7, die in Fig. 3 dargestellt ist. Die Funktion des Sensors wird im Folgenden beschrieben.

Die Elektrodenanordnung 6, welche z.B. als Printplatte mit einem isolierenden Träger 8 und darauf angeordneten Elektroden ausgestaltet ist, wird in Fig. 2, von der Seite des Tanks 1 her gesehen, dargestellt. Die Elektroden gemäss Fig. 2 umfassen eine erste Messelektrode 10, eine zweite Messelektrode 11, ein dritte Messelektrode 12, eine Anwesenheits-Elektrode 13 sowie mindestens eine Gegenelektrode 14.

Die genannten Elektroden 10 - 14 sind vorteilhaft auf derjenigen Seite des Trägers 8 angeordnet, die dem Tank 1 zugewandt ist. Um eine gute kapazitive Ankopplung zu erreichen, können sie aussen an einer Wand des Tanks 1 anliegen. In der Ausführung nach Fig. 1 handelt es sich dabei um die Rückwand 16 des Tanks. Zumindest diese Wand sollte im Bereich der Messelektroden 10 - 12 aus einem nichtmetallischen Material mit tiefer Permittivität (ε < 2) bestehen, so dass das elektrische Feld der Elektroden bis in das Wasser im Tank eindringen kann.

Die Wand 16 ist, wie der Träger 8, vorzugsweise im Wesentlichen eben ausgestaltet.

Um eine gute, definierte Anordnung der Elektroden an der Wand 16 zu erreichen, ist vorzugsweise ein Andruckmittel vorgesehen, um die Elektrodenanordnung 6 an die Wand 16 anzudrücken. Bei der Ausführung nach Fig. 1 weist dieses Andruckmittel mindestens ein elastisch verformbares Element 17 auf, welches bei Andrücken der Wand 16 gegen die Elektrodenanordnung 6 komprimiert wird. In der dargestellten Ausführung sind als elastisch verformbare Elemente 17 zwei Federmechanismen vorgesehen, welche zwischen dem stationären Teil 5 des Geräts und der Elektrodenanordnung 6 bzw. dem Träger 8 angeordnet sind.

Alternativ oder zusätzlich zu den verformbaren Elementen 17 kann das Andruckmittel auch einen aktiven Bewegungsantrieb (nicht gezeigt) aufweisen, der beim Einsetzen des Tanks eine Bewegung der Elektrodenanordnung 6 zur Wand 16 hin erzeugt. Ein solcher Bewegungsantrieb kann z.B. die Schwenkbewegung im Bereich der Schwenkachse 3 an eine Zahnstange übertragen, welche ihrerseits eine lineare Bewegung der Elektrodenanordnung 6 gegen den Tank hin erzeugt.

Die erste Messelektrode 10 ist vorzugsweise länglich ausgestaltet und erstreckt sich über eine vorgegebene Höhe H in vertikaler Richtung (vgl. Fig. 2). Die Höhe H beträgt bevorzugt mindestens 1 cm, insbesondere mindestens 5 cm. Die Kapazität der ersten Messelektrode 10 gegenüber den z.B. auf Referenzpotenzial liegenden Gegenelektroden 14 (von denen sich mindestens eine, oder beide kombiniert, auch über mindestens die Höhe H erstreckt bzw. erstrecken) ist eine Funktion der Höhe des Wasserpegels, da sich die Feldlinien von der Messelektrode bis in das Innere des Tanks erstrecken. Liegt der Wasserpegel unterhalb der ersten Messelektrode 10, so ist diese Kapazität minimal. Liegt der Wasserpegel oberhalb der ersten Messelektrode 10, so ist diese Kapazität maximal. Liegt der Wasserpegel irgendwo im Bereich der Höhe der Messelektrode, so liegt die Kapazität zwischen diesen beiden Extremwerten und ist, vereinfacht gesagt, eine ungefähr lineare Funktion der Wasserhöhe.

Somit kann durch eine Messung der Kapazität (oder einer anderen, von der Kapazität abhängigen Messgrösse) eine ortsaufgelöste Schätzung der Höhe des Wasserpegels gemacht werden. Zu diesem Zweck ist die Auswerteelektronik 7 vorgesehen. Diese ist dazu ausgestaltet, einen Messwert zu erzeugen, der abhängig, vorzugsweise proportional (oder invers proportional) abhängig, von der Kapazität zwischen der ersten Messelektrode 10 und den Gegenelektroden 14 ist.

Der Fachmann kennt eine Vielzahl von Möglichkeiten, um einen Messwert abhängig von einer Kapazität zu messen, z.B. indem die Kapazität als Frequenz bestimmendes Element in einem Schwingkreis eingesetzt und die Schwingkreisfrequenz oder -periode gemessen wird, oder indem eine Lade- oder eine Entladezeit der Kapazität über einen vorgegebenen Widerstand bestimmt wird. Es gibt auch fertige Bausteine, welche entsprechende Messungen durchführen, z.B. in Form des MSP430 Mikrokontrollers von Texas Instruments. In Fig. 3 ist unter Bezugsziffer 7 eine entsprechende Schaltanordnung als Funktionsblock dargestellt.

In der Ausführung nach Fig. 2 ist weiter eine zweite Messelektrode 11 vorgesehen, welche auf einer Höhe tiefer als die erste Messelektrode 10 angeordnet ist. Sie ist kürzer als die erste Messelektrode, und ihre Höhe kann durchaus auch kleiner als 1 cm sein, da sie nicht die Aufgabe hat, eine ortsaufgelöste Schätzung des Wasserpegels zu erzeugen. Vielmehr soll sie lediglich (redundant zur ersten Messelektrode 10) eine verlässlichere Aussage darüber zulassen, ob der Wasserstand einen gewissen Minimalstand unterschritten hat.

Weiter ist eine dritte Messelektrode 12 vorgesehen, welche auf einer Höhe höher als die erste Messelektrode 10 angeordnet ist. Auch sie kann kürzer als die erste Messelektrode 10 sein, und ihre Höhe kann wiederum auch kleiner als 1 cm sein. Sie dient dazu, (redundant zur ersten Messelektrode 10) eine verlässlichere Aussage darüber zuzulassen, ob der Wasserstand einen gewissen Maximalstand überschritten hat.

Die zweite und die dritte Messelektrode 11 bzw. 12 können, seitlich versetzt, die erste Messelektrode in vertikaler Richtung auch etwas überlappen.

Anstelle einer langen Messelektrode, deren Signal bei geeigneter Auswertung eine ortsaufgelöste Messung des Wasserpegels erlaubt, können grundsätzlich auch drei oder (vorzugsweise) mehr Messelektroden auf unterschiedlichen Höhen angeordnet werden, von denen jede lediglich zur Erzeugung eins binären Signals verwendet wird. Die Zahl der Messelektroden ist der gewünschten örtlichen Auflösung der Wasserpegelmessung anzupassen. In diesem Falle ist die Auswerteelektronik 7 so auszugestalten, dass sie für jede der drei oder mehr Messelektroden ein Wasserpegelsignal erzeugt, welches davon abhängt, ob der Wasserpegel jeweils unter- oder oberhalb der jeweiligen Messelektrode ist.

Die Kapazität, die im kapazitiven Sensor jeweils gemessen wird, ist die Kapazität zwischen einer Messelektrode 10 - 12 und den Gegenelektroden 14. Die Gegenelektroden können alle auf einem gemeinsamen elektrischen Potenzial, z.B. Masse, liegen. Es kann auch nur eine einzige Gegenelektrode vorgesehen sein. In der Ausführung nach Fig. 2 sind die Messelektroden 10 - 12 auf mindestens zwei Seiten von Gegenelektroden umgeben.

Um eine genauere Messung vorzusehen, kann zusätzlich eine Referenzelektrode 20 vorgesehen sein (Fig. 3), welche so angeordnet ist, dass ihre Kapazität (z.B. gegen eine ebenfalls auf Masse liegende Hilfselektrode 21) im Wesentlichen unabhängig vom Füllstand des Tanks ist. Sie ist vorzugsweise auch auf dem Träger 8 angeordnet, aber an einem Ort, an welchem sie nicht in die Nähe des eingesetzten Tanks kommt. Die Auswerteelektronik 7 erzeugt Messsignale, welche von der Kapazität der Messelektroden abhängen, ebenso ein Messsignal, das von der Kapazität der Referenzelektrode 20 abhängt. Alle diese Messsignale sind abhängig von Umweltparametern (Temperatur, Luftfeuchte etc) und Betriebsparametern (Speisespannung, Gerätealter etc.). Durch geeignete Verrechnung der Messsignale von den Messelektroden 10 - 12 mit dem Messsignal von der Referenzelektrode 20 kann die Abhängigkeit von diesem Parametern in den aus den Messelektroden hergeleiteten Messsignalen reduziert werden. Geeignete Verfahren, welche z.B. (je nach Messmethode) auf Division oder Subtraktion beruhen, sind dem Fachmann bekannt.

Das in Fig. 1 - 3 dargestellte Gerät besitzt weiter einen kapazitiven Anwesenheitssensor, der dazu ausgestaltet ist, ein Signal abhängig davon zu erzeugen, ob der Tank 1 in das Haushaltsgerät eingesetzt ist oder nicht. Dieser umfasst ein Anwesenheits-Elektrodenpaar, welches in der dargestellten Ausführung von der Anwesenheits-Elektrode 13 und der Gegenelektrode 14 gebildet wird. Weiter ist eine Detektionsschaltung zur Erzeugung eines von der Kapazität zwischen dem Anwesenheits-Elektrodenpaar 13, 14 abhängigen Signals vorgesehen, welche in der Ausführung nach Fig. 3 von der Auswerteelektronik 7 gebildet wird, mit welcher auch die Kapazitäten aller anderen Elektroden ausgemessen werden. Am Tank 1 ist ein elektrisch leitender Bereich vorgesehen, welcher in Fig. 1 unter Ziffer 23 angedeutet ist. Vorzugsweise liegt dieser Bereich oberhalb des maximalen Wasserstands, und er kann z.B. von einem metallischen Aufkleber gebildet werden. Der Bereich 23 sowie das Anwesenheits-Elektrodenpaar 13, 14 sind so angeordnet, dass bei in das Gerät eingesetztem Tank 1 das Anwesenheits-Elektrodenpaar 13, 14 beim elektrisch leitenden Bereich 23 zu liegen kommt, derart, dass die Kapazität des Anwesenheits-Elektrodenpaars 13, 14 eine Funktion davon ist, ob der Tank korrekt eingesetzt ist oder nicht. Mit Hilfe der Auswerteelektronik 7 kann auf diese Weise detektiert werden, ob sich der Tank 1 in Arbeitsstellung befindet.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Haushaltgerät mit mindestens einem Tank (1) zur Aufnahme von Wasser und mit einem Füllstandssensor (6, 7) zur Messung eines Füllstands des Tanks (1), **dadurch gekennzeichnet, dass** der Füllstandssensor (6, 7) ein kapazitiver Sensor ist, der ausserhalb des Tanks (1) angeordnet ist.

2. Haushaltgerät nach Anspruch 1, wobei der Tank (1) mechanisch vom Füllstandssensor (6, 7) derart getrennt ist, dass der Tank (1) ohne den Füllstandssensor (6, 7) aus dem Haushaltgerät entnehmbar ist.

3. Haushaltgerät nach einem der vorangehenden Ansprüche, wobei eine Elektrodenanordnung (6) des kapazitiven Sensors bei eingesetztem Tank (1) aussen an einer Wand (16) des Tanks (1) anliegt.

4. Haushaltgerät nach Anspruch 3, wobei ein Andruckmittel vorgesehen ist, um die Elektrodenanordnung (6) an die Wand (16) anzudrücken.

5. Haushaltgerät nach Anspruch 4, wobei das Andruckmittel ein elastisch verformbares Element (17) aufweist, das bei Andrücken der Wand (16) gegen die Elektrodenanordnung (6) komprimiert wird.

6. Haushaltgerät nach einem der Ansprüche 4 oder 5, wobei das Andruckmittel einen Bewegungsantrieb aufweist, welcher beim Einsetzen des Tanks (1) eine Bewegung der Elektrodenanordnung (6) gegen die Wand (16) hin erzeugt.

7. Haushaltgerät nach einem der Ansprüche 3 bis 6, wobei eine Schwenkhalterung (2) zum schwenkbaren Halten des Tanks (1) vorgesehen ist, wobei die Wand (16) in einer ersten Schwenkposition des Tanks (1) an die Elektrodenanordnung (6) anliegt und in einer zweiten Schwenkposition nicht, und insbesondere wobei der Tank (1) in der zweiten Schwenkposition dem Haushaltgerät entnehmbar ist.

8. Haushaltgerät nach einem der vorangehenden Ansprüche, wobei der kapazitive Sensor eine sich über eine vorgegebene Höhe erstreckende erste Messelektrode (10) aufweist, sowie eine Auswerteelektronik (7), welche abhängig von einer Kapazität zwischen der ersten Messelektrode (10) und einer Gegenelektrode (14) mehr als zwei unterschiedliche Füllstandswerte erzeugt, und insbesondere wobei die vorgegebene Höhe mindestens 1 cm, insbesondere mindestens 5 cm, beträgt.

9. Haushaltgerät nach Anspruch 8, wobei der kapazitive Sensor eine zweite Messelektrode (11) aufweist, welche auf einer Höhe tiefer als die erste Messelektrode angeordnet ist, um einen Minimalstand des Wassers zu detektieren.

10. Haushaltgerät nach einem der Ansprüche 8 oder 9, wobei der kapazitive Sensor eine dritte Messelektrode (12) aufweist, welche auf einer Höhe höher als die erste Messelektrode (10) angeordnet ist, um einen Maximalstand des Wassers zu detektieren.

11. Haushaltgerät nach einem der vorangehenden Ansprüche, wobei der kapazitive Sensor mindestens drei auf unterschiedlichen Höhen angeordnete Messelektroden aufweist, sowie eine Auswerteelektronik (7), um für jede der drei Messelektroden ein Wasserpegelsignal zu erzeugen, welches davon abhängt, ob der Wasserpegel jeweils unter- oder oberhalb der jeweiligen Messelektrode ist.

12. Haushaltgerät nach einem der vorangehenden Ansprüche, wobei der kapazitive Sensor mindestens eine Messelektrode (10 - 12) und eine Gegenelektrode (14) aufweist, wobei die Kapazität zwischen der Messelektrode (10 - 12) und der Gegenelektrode (14) abhängig vom Wasserpegel im Tank (1) ist,
und insbesondere wobei mehrere Messelektroden (10 - 12) vorgesehen sind und nur eine Gegenelektrode (14) oder mehrere Gegenelektroden (14) auf einem gemeinsamen elektrischen Potenzial.

13. Haushaltgerät nach Anspruch 12, wobei der kapazitive Sensor mindestens eine Referenzelektrode (20) aufweist, deren Kapazität unabhängig vom Füllstand ist, sowie eine Auswerteelektronik (7), welche dazu ausgestaltet ist, eine Abhängigkeit eines aus der Kapazität der Messelektrode (10 - 12) hergeleiteten Messsignals von Umwelt- oder Betriebsparametern unter Verwendung eines Signals von der Referenzelektrode (20) zu reduzieren.

14. Haushaltgerät nach einem der vorangehenden Ansprüche, wobei der kapazitive Sensor mindestens eine Messelektrode (10 - 12) und mindestens eine Gegenelektrode (14) aufweist, sowie eine Auswerteelektronik (7), welche dazu ausgestaltet ist, ein von einer Kapazität zwischen der Messelektrode (10 - 12) und der Gegenelektrode (14) abhängiges Signal zu erzeugen, wobei die Messelektrode (10 - 12) sowie die Gegenelektrode (14) bei eingesetztem Tank (1) von aussen am Tank (1) anliegen.

15. Haushaltgerät nach einem der vorangehenden Ansprüche, wobei das Haushaltsgerät einen Anwesenheitssensor (13, 14, 21) aufweist, welcher dazu ausgestaltet ist, ein Signal abhängig davon zu erzeugen, ob der Tank (1) in das Haushaltsgerät eingesetzt ist, wobei der Anwesenheitssensor (13, 14, 21) ein Anwesenheits-Elektrodenpaar (13, 14) und eine Detektionsschaltung (21) zur Erzeugung eines von der Kapazität zwischen dem Anwesenheits-Elektrodenpaar (13, 14) abhängigen Signals aufweist, wobei am Tank (1) ein elektrisch leitender Bereich (23) angeordnet ist, und wobei bei eingesetztem Tank (1) das Anwesenheits-Elektrodenpaar (13, 14) beim elektrisch leitenden Bereich (23) zu liegen kommt.
